(19) Europäisches Patentamt
European Patent Office
Office européen des brevets

(11) **EP 4 663 004 A1**

(12) **EUROPÄISCHE PATENTANMELDUNG**

(43) Veröffentlichungstag:
**17.12.2025 Patentblatt 2025/51**

(21) Anmeldenummer: **24181059.7**

(22) Anmeldetag: **10.06.2024**

(51) Internationale Patentklassifikation (IPC):
**A01F 25/16** *(2006.01)* **A01F 25/18** *(2006.01)*

(52) Gemeinsame Patentklassifikation (CPC):
**A01F 25/166; A01F 25/18; A01F 25/186**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Deere & Company**
**Moline, IL 61265 (US)**

(72) Erfinder:
- **Brocke, Stefan**
  **Mannheim (DE)**
- **Fritz, Norbert**
  **Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(54) **VERFAHREN UND SYSTEM ZUR ERMITTLUNG EINER DICHTE EINES ERNTEGUTES**

(57) Die Erfindung betrifft ein Verfahren zur Ermittlung einer Dichte (Di_e) eines gelagerten Erntegutes (12), dessen Oberfläche (14) von einem Nutzfahrzeug (16) zur Verdichtung überfahren wird. Die Dichte (Di_e) wird mittels eines Radarsensors (34) ermittelt, welcher Radarsignale (36) in Richtung des Erntegutes (12) sendet und an dem Erntegut (12) reflektierte Radarsignale (38) empfängt. In Abhängigkeit von Referenzdaten (d_ref) wird ein Dichtemodell (Di_mod) bereitgestellt. Die Dichte (Di_e) wird in Abhängigkeit von dem bereitgestellten Dichtemodell (Di_mod) und den empfangenen reflektierten Radarsignalen (38) ermittelt. Weiterhin betrifft die Erfindung ein System (10) mit einer Steuereinheit (18) zur Durchführung eines solchen Verfahrens.

EP 4 663 004 A1

FIG. 2

**Beschreibung**

Die Erfindung betrifft ein Verfahren gemäß dem Oberbegriff des unabhängigen Anspruchs 1 und ein System gemäß dem Oberbegriff des unabhängigen Anspruchs 13.

Aus DE 10 2020 110 297 A1 ist es bekannt, während einer Verdichtung von Silage in einem Silo die Dichte der Silage zu erfassen. Hierzu wird ein mit Radarwellen arbeitender Sensor eingesetzt, der an der Vorderseite eines Verdichtungsfahrzeugs angebracht sein kann.

Aufgabe der vorliegenden Erfindung ist es, eine radarbasierte Ermittlung einer Silage-Dichte weiter zu verbessern.

Diese Aufgabe wird durch ein Verfahren mit den Merkmalen des Patentanspruchs 1 und durch ein System mit den Merkmalen des Patentanspruchs 13 gelöst.

Weitere vorteilhafte Ausgestaltungen der Erfindung gehen aus den Unteransprüchen hervor.

Gemäß Anspruch 1 wird ein Verfahren zur Ermittlung einer Dichte eines gelagerten Erntegutes bzw. Biomaterials vorgeschlagen, dessen Oberfläche von einem Nutzfahrzeug zur Verdichtung überfahren wird. Dabei werden von einem Radarsensor (z.B. mittels einer Sendeantenne) Radarsignale in Richtung des Erntegutes gesendet. Außerdem werden von der Radar-Sensorik (z.B. mittels einer Empfangsantenne) die an dem Erntegut reflektierten Radarsignale empfangen. In Abhängigkeit von Referenzdaten wird ein Dichtemodell bereitgestellt. In Abhängigkeit von dem bereitgestellten Dichtemodell und von den empfangenen reflektierten Radarsignalen wird die Dichte des Erntegutes ermittelt.

Vorzugsweise enthält oder repräsentiert das Dichtemodell einen definierten stochastischen bzw. mathematischen Zusammenhang zwischen verschiedenen Referenzdaten, beispielsweise als eine oder mehrere spezifische Formeln, Algorithmen oder dergleichen. Dieser Zusammenhang bildet eine definierte Basis für eine präzise Ermittlung der Dichte in Abhängigkeit der während der Verdichtungsarbeit empfangenen reflektierten Radarsignale.

Die Bereitstellung des Dichtemodells ermöglicht es, abgesehen von den aktuell empfangenen reflektierten Radarsignalen auf eine umfangreiche Generierung oder Erfassung aktueller Daten und Parameter während der Verfahrensdurchführung zu verzichten. Hierdurch kann der messtechnische Aufwand, insbesondere die technische Ausstattung am Nutzfahrzeug, zur Dichteermittlung gering gehalten werden.

Unter Zuhilfenahme des mit Hilfe von Referenzdaten generierten und bereitgestellten Dichtemodells kann eine aktuelle Dichte bzw. ein aktueller Verdichtungszustand des gelagerten Erntegutes in Echtzeit bereits während des Überfahrens der Erntegut-Oberfläche ermittelt werden. Der technische Aufwand hierfür ist äußerst gering, da neben dem Dichtemodell lediglich die aktuell empfangenen reflektierten Radarsignale benötigt werden. Die Kenntnis der aktuellen Dichte bzw. des aktuellen Verdichtungszustands unterstützt einen effizienten Fahrbetrieb des Nutzfahrzeugs, da die Verdichtungstätigkeit bei Erreichen einer gewünschten und präzise ermittelbaren Dichte beendet werden kann. Mit anderen Worten kann die Qualität, insbesondere Futterqualität, des gelagerten und verdichteten Erntegutes bei gleichzeitiger Effizienzsteigerung der Verdichtungstätigkeit verbessert werden. Hierdurch kann qualitativ hochwertiges Tierfutter mit niedrigeren Betriebskosten hergestellt werden. Eine Kenntnis und Überwachung der kontinuierlich ermittelbaren aktuellen Dichte des gelagerten Erntegutes entlastet eine Arbeitsperson (z.B. Fahrzeugführer) bei der Verdichtungstätigkeit und hilft ihr, Entscheidungen für eine effiziente Verdichtungsarbeit zu treffen. Insbesondere kann die Arbeitsperson während des Fahrbetriebs des Nutzfahrzeugs in Echtzeit entscheiden, ob eine ausreichende Verdichtung erreicht worden ist oder noch nicht. Außerdem kann eine elektronische Verarbeitung der jeweils ermittelten aktuellen Dichte eine zumindest teilweise Automatisierung der Verdichtungstätigkeit unterstützen.

Die ermittelte Dichte kann beispielsweise durch einen absoluten Zahlenwert oder durch einen prozentualen Wert repräsentiert werden. Als prozentuale Werte können z.B. 0% für einen unverdichteten Zustand, 100% für einen vollständig verdichteten Zustand sowie Werte zwischen 0% und 100% für einen entsprechend teilweise verdichteten Zustand des Erntegutes verwendet werden.

Während der Verdichtungsarbeit muss im Wesentlichen nur ein Aussenden der Radarsignale in Richtung des Erntegutes veranlasst werden, vorzugsweise automatisiert oder manuell (z.B. an einer Bedienungs-Schnittstelle, durch ein Betätigungselement, etc.). Die weiteren Verfahrensschritte bis zur Ermittlung der Dichte können mit geringem technischen Aufwand automatisch durchgeführt werden.

Während der Verdichtungsarbeit kann durch wiederholtes Ausführen des Verfahrens die jeweils aktuell ermittelte Ist-Dichte mit einer Soll-Dichte (automatisch oderdurch eine Arbeitsperson) verglichen werden, so dass sich die Ist-Dichte des Erntegutes mit einem optimierten Aufwand an die gewünschte Soll-Dichte annähert. Hierdurch kann eine stabile Silage sehr effizient hergestellt werden.

Die Verdichtung des (z.B. in einem Silo) gelagerten Erntegutes ist Bestandteil des Herstellungsprozesses für Silage als Tierfutter. Als Erntegut wird vorzugsweise Biomasse von Agrarflächen verwendet. Insbesondere sind unterschiedliche Typen des Erntegutes denkbar wie etwa Gras oder der Nicht-Fruchtanteil von Mais, Hirse oder anderen Getreidepflanzen.

Bei dem Nutzfahrzeug zur Verdichtung des Erntegutes handelt es sich z.B. um einen Traktor. Zur Verdichtung können vorzugsweise die Fahrzeugreifen des Traktors dienen. Alternativ oder zusätzlich kann eine separate, mit dem Traktor gekoppelte Verdichtungsvorrichtung (z.B. Verdichtungsgerät, Silowalze) vorgesehen sein.

Vorzugsweise werden die reflektierten Radarsignale und/oder mindestens eine davon abgeleitete physikalische Größe mit dem Dichtemodell verarbeitet. Die Verarbeitung kann mathematisch und physikalisch präzise im Rahmen einer Signalverarbeitung in einer Steuereinheit erfolgen. Vorzugsweise dienen bei der Verarbeitung die reflektierten Radarsignale und/oder davon abgeleitete Größen als Eingangsgrößen für das Dichtemodell, wobei die Eingangsgrößen bzw. deren Werte in dem Dichtemodell mathematisch verarbeitet werden können. Hierbei kann das Dichtemodell eine oder mehrere geeignete Formeln oder Algorithmen zur Berechnung der Dichte enthalten. Auf diese Weise wird eine komfortable und präzise Ermittlung der Dichte unterstützt. Beispielsweise wird von reflektierten Radarsignalen ein Amplitudenspektrum berechnet, deren Amplitudenwerte bei vorbestimmten charakteristischen Frequenzen ermittelt werden. Somit können definierte Amplituden des Amplitudenspektrums als Eingangsgrößen für das Dichtemodell verwendet werden. In dem Dichtemodell kann beispielsweise eine Formel zur Ermittlung einer Modelldichte eine Summe aus mehreren Teilprodukten $c_1 \cdot a_1 + c_2 \cdot a_2 + c_3 \cdot a_3$ enthalten, wobei $a_1$, $a_2$, $a_3$ Platzhalter für die ermittelten Amplitudenwerte sind und die Koeffizienten $c_1$, $c_2$, $c_3$ von den Referenzdaten abgeleitet sind. Von dieser Modelldichte als Verarbeitungsergebnis kann die zu ermittelnde Dichte des Erntegutes abgeleitet, insbesondere mit dieser Modelldichte gleichgesetzt werden.

In einer bevorzugten Ausführungsform wird in Abhängigkeit von den empfangenen reflektierten Radarsignalen und/oder von dem bereitgestellten Dichtemodell ein aktueller Feuchtegehalt des Erntegutes ermittelt. Hierdurch kann auf eine spezifische Sensorik am Nutzfahrzeug zur Feuchteermittlung kostensparend verzichtet werden.

Vorzugsweise werden die Referenzdaten und/oder das von den Referenzdaten abgeleitete Dichtemodell bereits vor Beginn der Verdichtung des Erntegutes generiert und das Dichtemodell kann dann komfortabel bereitgestellt werden, sobald das Verfahren zur Dichteermittlung durchgeführt werden soll. Demzufolge werden die Referenzdaten nach Art von Kalibrierdaten generiert und das Dichtemodell kann als ein definiertes Ergebnis eines Kalibrierverfahrens betrachtet werden. Dies unterstützt einen reduzierten physikalisch-technischen Aufwand während der Verfahrensdurchführung selbst. Das Dichtemodell und optional auch die Referenzdaten können insbesondere in einer Datenbank abgespeichert und hierdurch für die Verfahrensdurchführung bereitgestellt werden. Die Referenzdaten können beispielsweise in experimentellen Versuchen generiert werden. Hierbei können spezifische Vorrichtungen, wie etwa ein Teststand zum Testen (insbesondere zum definierten Verdichten) von Referenz-Material eines Erntegutes, ein Ofen zum Trocknen von Referenz-Material und/oder ein Referenzsensor zur Erfassung von Referenzwerten des untersuchten Referenz-Materials verwendet werden.

Vorteilhaft werden die Referenzdaten und/oder das Dichtemodell für unterschiedliche Zustände desselben Referenz-Materials generiert und bereitgestellt, so dass im Anwendungsfall eine möglichst präzise aktuelle Dichteermittlung bei unterschiedlichen Zuständen des Erntegutes unterstützt wird.

Als physikalische Größe(n) für die Referenzdaten ist vorzugsweise mindestens eine der folgenden Größen bezüglich des Referenz-Materials eines ausgewählten Erntegutes vorgesehen:

- eine Referenz-Dichte,
- ein Referenz-Feuchtegehalt,
- eine Referenz-Schnittlänge.

Somit werden für eine Beprobung bzw. Generierung von Referenzdaten insbesondere solche physikalische Größen berücksichtigt, welche auch bei der Analyse des Erntegutes während der Verfahrensdurchführung von Interesse sind. Die Referenz-Dichte kann als Masse (z.B. Trockenmasseanteil oder Gesamtmasse) pro Volumeneinheit ermittelt werden. Die Referenzdaten bezüglich der Referenz-Dichte können auch eine Kennlinie enthalten, welche ein Verhältnis zwischen einem (Rück-)Dehnungsverhalten des Referenz-Materials und einer darauf einwirkenden definierten Verdichtungskraft repräsentiert.

Der Referenz-Feuchtegehalt (z.B. prozentual) kann mittels eines Referenzsensors oder mittels eines Trocknungsverfahrens (z.B. Massenverlust bei vollständiger Trocknung in einem Ofen) bestimmt werden. Die Referenz-Schnittlänge kann mittels eines geeigneten optischen Verfahrens bestimmt werden.

Die Referenzdaten enthalten weiter vorzugsweise Referenz-Radarinformationen auf der Basis von an dem Referenz-Material reflektierten Referenz-Radarsignalen. Mit anderen Worten repräsentiert die Referenz-Radarinformation ein Reflexionsverhalten des Referenz-Materials. Dabei kann die Referenz-Radarinformation unterschiedliche Verdichtungszustände (von 0% bis 100%) berücksichtigen.

Insbesondere enthalten die Referenzdaten einen geeigneten mathematischen bzw. stochastischen Zusammenhang zwischen der Referenz-Radarinformation und mindestens einer der vorgenannten Größen (Referenz-Dichte, Referenz-Feuchtegehalt, Referenz-Schnittlänge). Dies unterstützt eine präzise Dichteermittlung, wenn während der Verfahrensdurchführung aktuell empfangene reflektierte Radarwellen mit dem von Referenzdaten abgeleiteten Dichtemodell verarbeitet werden.

Weiter vorzugsweise werden die Referenzdaten und/oder das Dichtemodell für unterschiedliche Typen von Referenz-Material, d.h. für unterschiedliche Typen des Erntegutes, generiert und bereitgestellt. Somit können im Anwendungsfall die für den zu verdichtenden Typ des Erntegutes zutreffenden Referenzdaten und/oder das zutreffende Dichtemodell komfortabel ausgewählt bzw. abgerufen werden.

Vorzugsweise wird zur Ermittlung der aktuellen Dichte mit noch größerer Genauigkeit zusätzlich mindestens einer der folgenden Informationen berücksichtigt:

-	eine Kalibrierinformation,
-	ein Feuchtegehalt des Erntegutes,
-	eine Schnittlänge oder Häcksellänge des Erntegutes,
-	ein Typ des Erntegutes,
-	eine den Beginn der Verdichtung repräsentierende Startinformation.

Durch die Berücksichtigung dieser mindestens einen zusätzlichen Information kann die radarbasierte Dichteermittlung noch präziser erfolgen. Diese mindestens eine Information kann zumindest teilweise durch einen oder mehrere geeignete Sensoren bereitgestellt werden, welche bevorzugt an dem Nutzfahrzeug angeordnet sind.

Die Kalibrierinformation enthält beispielsweise eine vorbekannte Kennlinie (z.B. ein Zusammenhang zwischen der Erntegut-Dichte und mindestens einer anderen physikalischen Größe) oder Kalibrierwerte für einzelne Konstanten und Parameter.

Bezüglich des Typs des Erntegutes kann beispielsweise zwischen gemähtem Gras, Mais und verschiedenen Getreidepflanzen unterschieden werden. Die Information kann auch einen biologischen Zustand (z.B. frisch oder vorgewelkt) des Erntegutes repräsentieren.

Die den Beginn der Verdichtung repräsentierende Startinformation kann ein Startsignal für den Start der Verfahrensdurchführung, d.h. für den Start der Dichteermittlung, sein. Die Startinformation kann automatisiert (z.B. durch eine Sensorik) oder manuell (z.B. durch einen Fahrer des Nutzfahrzeugs) erzeugt werden. Alternativ oder zusätzlich kann die Startinformation einen Startzeitpunkt der Verdichtungstätigkeit enthalten, so dass bei der Dichteermittlung auch eine aktuelle Zeitdauer der Verdichtungstätigkeit berücksichtigt werden kann.

Die vorgenannte mindestens eine Information wird insbesondere während der Verdichtungsüberfahrt des Nutzfahrzeugs generiert. Somit unterstützen aktuelle Daten während der Verfahrensdurchführung eine präzise Ermittlung der Dichte.

Die Verarbeitung von Daten (z.B. in einer Steuereinheit) zur Ermittlung der Dichte kann während der Verdichtungsüberfahrt oder während eines Stillstands des Nutzfahrzeugs, insbesondere während seines Aufenthalts am Lagerort des Erntegutes bzw. im Silo, erfolgen. In beiden Fällen trägt das Verfahren in effizienter Weise dazu bei, dass am Lagerort des Erntegutes in Echtzeit präzise Werte bezüglich der aktuellen Dichte des Erntegutes zur Verfügung gestellt werden können.

Vorteilhaft wird entlang der zu verdichtenden Oberfläche des gelagerten Erntegutes an mehreren Oberflächenabschnitten jeweils eine Dichte ermittelt. Hierdurch können gezielt einzelne Oberflächenabschnitte des Erntegutes öfter oder weniger oft als andere Oberflächenabschnitte überfahren werden, um sehr effizient eine gleichmäßige Verdichtung entlang der Oberfläche des Erntegutes zu erreichen.

Vorzugsweise wird die ermittelte Dichte an einer Anzeigeeinheit visualisiert. Die ermittelte Dichte kann beispielsweise als konkreter Zahlenwert (z.B. absolute Dichte oder prozentuale Dichte von 0% bis 100%) dargestellt werden. Im Falle der vorgenannten Abschnitts-Verdichtungszustände ist eine Visualisierung der in Oberflächenabschnitte eingeteilten Oberfläche des Erntegutes vorteilhaft, wobei unterschiedliche Abschnitts-Verdichtungszustände bzw. unterschiedliche Abschnitts-Dichten durch unterschiedliche Farben der Oberflächenabschnitte dargestellt sind.

Die Anzeigeeinheit (z.B. Bildschirm) kann Bestandteil einer Benutzerschnittstelle zur Eingabe, Anzeige und Ausgabe von Daten bzw. Informationen sein. Die Anzeigeeinheit kann innerhalb des Nutzfahrzeugs angeordnet sein oder außerhalb des Nutzfahrzeugs beispielsweise Bestandteil einer mobilen bzw. tragbaren Vorrichtung sein.

Die Erfindung betrifft weiter ein System zur Ermittlung einer Dichte eines gelagerten Erntegutes, mit einem Nutzfahrzeug zur Verdichtung des gelagerten Erntegutes, mit einem am Nutzfahrzeug angeordneten Radarsensor und mit einer Steuereinheit zur Durchführung des Verfahrens nach einem der Ansprüche 1 bis 12.

Das erfindungsgemäße System weist die oben beschriebenen Vorteile des erfindungsgemäßen Verfahrens auf. Dabei kann die Steuereinheit geeignete Algorithmen zur Ermittlung einer aktuellen Dichte bzw. eines aktuellen Verdichtungszustands des gelagerten Erntegutes enthalten. Das System erlaubt es, Daten bereitzustellen, welche auf eine präzise Soll-Dichte des gelagerten Erntegutes ausgerichtet sind. Dies unterstützt eine qualitativ hochwertige Futtermittelherstellung (z.B. Silage) bei gleichzeitig effizientem Arbeitseinsatz des Nutzfahrzeugs. Die mit dem Verfahren kontinuierlich ermittelbare aktuelle Dichte des Erntegutes entlastet den Fahrzeugführer und auch andere Arbeitspersonen während der Verdichtungstätigkeit. Außerdem können ermittelte Werte der Dichte als eine realistische Datenbasis für eine Automatisierung eines effizienten Arbeitsprozesses bei der Verdichtung des gelagerten Erntegutes dienen.

Die Steuereinheit kann im Zusammenhang mit der ermittelten aktuellen Dichte verschiedene weitere Daten generieren, welche während der Verdichtungstätigkeit eine Arbeitsperson mit weiteren Informationen und/oder eine Steuerung des Nutzfahrzeugs unterstützen können. Beispielsweise können mittels spezifischer Algorithmen der Steuereinheit eine noch notwendige Rest-Verdichtung oder eine vom Erntegut (z.B. vom Typ, biologischen Zustand, Feuchtegehalt) abhängige Soll-Verdichtung berechnet werden. In Abhängigkeit von der ermittelten aktuellen Dichte kann mittels der Steuereinheit das Nutzfahrzeug gesteuert werden, um dessen Arbeitseinsatz noch effizienter zu gestalten. So können relevante Fahrzeug-Parameter wie etwa der Reifendruck, die Fahrzeuggeschwindigkeit, die Lenkung oder die Fahrspur mittels der Steuereinheit in einer gewünschten Weise gesteuert werden.

Als Nutzfahrzeug sind insbesondere verschiedene Typen landwirtschaftlicher Nutzfahrzeuge (z.B. Traktor bzw. Schlepper, Schaufellader, Teleskoplader) geeignet. Auch autonome Fahrzeuge ohne Fahrzeugführer oder ferngesteuerte Fahrzeuge sind denkbar.

In einer bevorzugten Ausführungsform ist die Steuereinheit in dem Nutzfahrzeug integriert. Sie kann dort beispielsweise mit einem Systembus (z.B. ISO, CAN) und/oder mit anderen Funktionseinheiten des Nutzfahrzeugs verbunden sein. Der hierdurch mögliche Datenaustausch kann eine präzise und effiziente Funktionalität des Systems unterstützen.

Weiter vorzugsweise weist das System mindestens eine der folgenden Komponenten auf, welche mit der Steuereinheit über eine Datenverbindung verbunden ist:

- Eine Benutzerschnittstelle zur Eingabe und/oder Visualisierung von Daten. Hierdurch können benutzergestützte, insbesondere vom Fahrzeugführer stammende, Daten bei der Ermittlung der Dichte technisch einfach berücksichtigt werden. Außerdem können die aktuelle Dichte und der Fortschritt des Verdichtungsprozesses visualisiert werden, was die Arbeitsperson oder den Fahrzeugführer während der Verdichtungstätigkeit entlastet.
- Ein Positionserfassungssystem (z.B. GPS-Empfänger und ggf. weitere Bestandteile), welches vorzugsweise am landwirtschaftlichen Nutzfahrzeug angeordnet ist.
- Eine Datenzentrale mit Daten, welche während der Verfahrensdurchführung entstanden sind und/oder bereitgestellt sind. Hierdurch kann die Steuereinheit effizient auf Daten zugreifen, welche für die Ermittlung der Dichte und für die Überwachung des Verdichtungsfortschritts relevant sind.
- Eine Datenbank mit einem in Abhängigkeit von Referenzdaten bereitgestellten Dichtemodell für eine Ermittlung der Dichte in Abhängigkeit von an dem Erntegut reflektierten Radarsignalen. Dies unterstützt eine Versorgung der Steuereinheit mit Datenmaterial für eine präzise Ermittlung der Dichte des gelagerten Erntegutes. Diese Datenbank kann innerhalb oder außerhalb der Steuereinheit bereitgestellt werden.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1     eine blockschaltbildartige Darstellung des erfindungsgemäßen Systems, und

Fig. 2     eine blockschaltbildartige Darstellung von Einzelheiten des erfindungsgemäßen Verfahrens, und

Fig. 3     eine schematische Darstellung der Generierung von Referenzdaten, und

Fig. 4a    eine schematische Draufsicht eines Nutzfahrzeugs und eines zu verdichtenden Erntegutes, und

Fig. 4b    eine Seitenansicht des Nutzfahrzeugs und des zu verdichtenden Erntegutes gemäß Pfeilrichtung IV-B in Fig. 4a, und

Fig. 5     eine schematische Seitenansicht einer Sensorvorrichtung mit einem Radarsensor, und

Fig. 6     eine vergrößerte schematische Ansicht des Details VI in Fig. 1, und

Fig. 7a    eine Seitenansicht eines Nutzfahrzeugs mit der Sensorvorrichtung gemäß Fig. 6 in einer Arbeitsposition, und

Fig. 7b    die Seitenansicht des Nutzfahrzeugs gemäß Fig. 7a mit der Sensorvorrichtung in einer Transportposition.

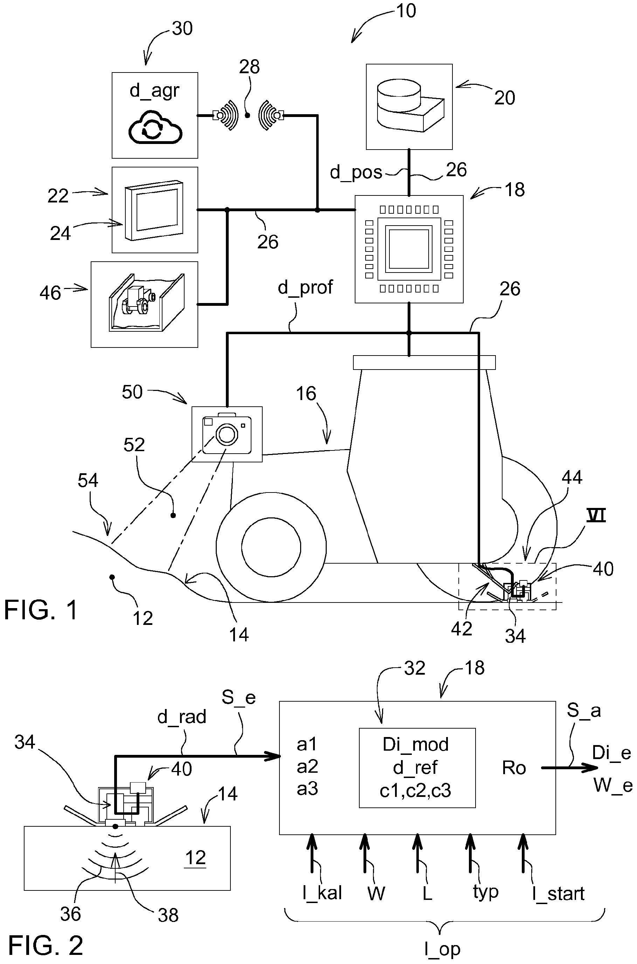

Fig. 1 zeigt ein System 10 zur Ermittlung einer Dichte Di_e eines gelagerten Erntegutes 12, dessen Oberfläche 14 von einem landwirtschaftlichen Nutzfahrzeug 16, hier in Form eines Traktors, zur Verdichtung überfahren wird. Die ermittelte Dichte Di_e wird von Ausgangssignalen S_a einer Steuereinheit 18 ausgegeben. Die Ausgangssignale können optional außerdem einen mittels der Steuereinheit 18 ermittelten Feuchtegehalt W_e des Erntegutes 12 und weitere interessierende Daten im Zusammenhang mit der Verdichtungstätigkeit enthalten.

Die Steuereinheit 18 ist vorzugsweise in dem Nutzfahrzeug 16 integriert. Das Nutzfahrzeug 16 ist beispielsweise von einem Fahrzeugführer gesteuert oder als autonomes Fahrzeug automatisiert aktiv.

Das Nutzfahrzeug 16 und weitere Komponenten des Systems 10 sind über eine geeignete Datenverbindung mit der Steuereinheit 18 verbunden, um eine aktuelle Dichte Di_e zu ermitteln und einer Arbeitsperson (z.B. dem Fahrzeugführer) insbesondere visualisiert mitzuteilen.

Ein Positionserfassungssystem 20 (z.B. GPS) und eine Benutzerschnittstelle 22 (z.B. Tastatur und Anzeigeeinheit 24 zur Eingabe und/oder Visualisierung von Daten) sind im oder am Nutzfahrzeug 16 angeordnet und jeweils über eine drahtgebundene Datenverbindung 26 mit der Steuereinheit 18 verbunden. Über eine drahtlose Datenverbindung 28 ist die Steuereinheit 18 mit einer Datenzentrale 30 verbunden. Letztere kann basierend auf einer Cloud-Technologie aufgebaut sein. Sie kann als zentraler Datenspeicher und/oder Datenverarbeitungszentrum für verschiedene agrarbezogene Aktivitäten eines Landwirts bzw. einer Farm dienen. Die Datenzentrale 30 enthält u.a. verschiedene agrarbezogene Daten d_agr. Diese Daten d_agr können zumindest teilweise beispielsweise während der Durchführung des Verfahrens zur Ermittlung der Dichte Di_e entstanden und in der Datenzentrale 30 abgespeichert sein und/oder von der Datenzentrale 30 bereits vor der und somit auch während der Verfahrensdurchführung bereitgestellt sein. Beispielsweise sendet die Steuereinheit 18 verschiedene Ausgangssignale S_a, insbesondere die aktuelle Dichte Di_e, an die Anzeigeeinheit 24 für eine Visualisierung der Dichte Di_e in Echtzeit und überträgt diese Ausgangssignale S_a gleichzeitig über die Datenverbindung 28 an die Datenzentrale 30.

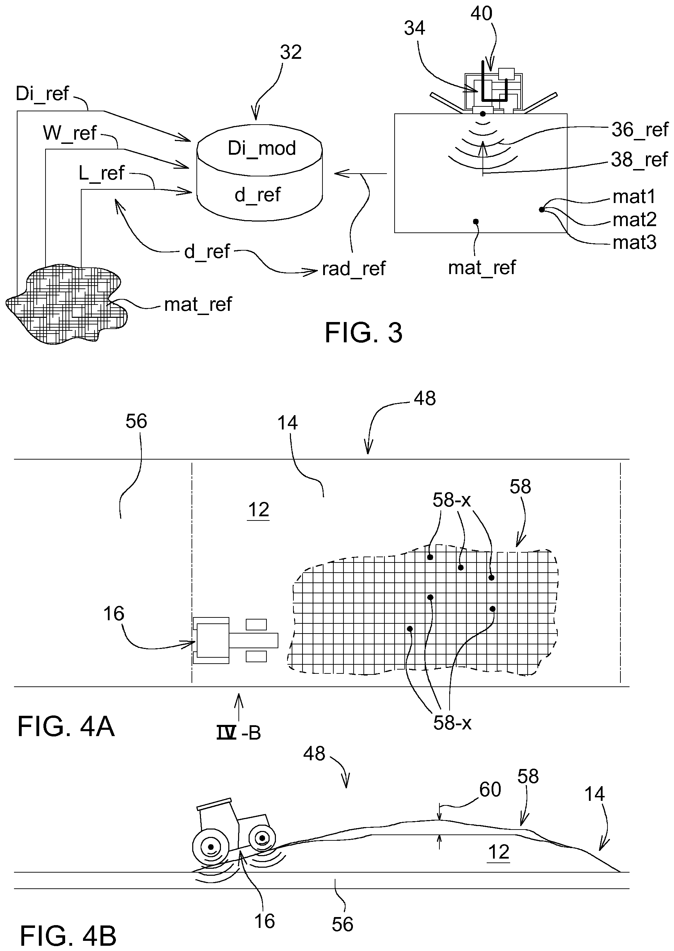

In der Steuereinheit 18 ist eine Datenbank 32 mit Referenzdaten d_ref und einem Dichtemodell Di_mod enthalten (Fig. 2). Alternativ können die Referenzdaten d_ref und/oder das Dichtemodell Di_mod bzw. kann die Datenbank 32 außerhalb der Steuereinheit 18, insbesondere in der Datenzentrale 30, vorhanden sein, so dass die Steuereinheit 18 jederzeit über die Datenverbindung 26 oder 28 auf die Referenzdaten d_ref und/oder das Dichtemodell Di_mod zugreifen kann. Die Referenzdaten d_ref und das Dichtemodell Di_mod werden anhand von Fig. 3 näher erläutert.

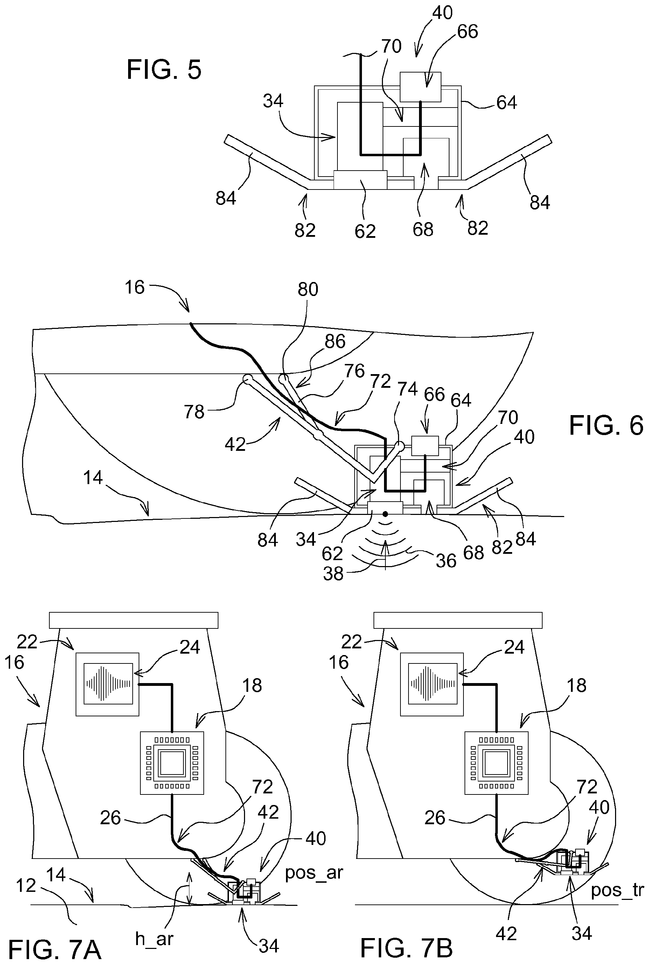

Unter Anwendung einer Radartechnologie ermittelt die Steuereinheit 18 eine aktuelle Dichte Di_e des Erntegutes 12. Zu diesem Zweck ist am Nutzfahrzeug 16 ein Radarsensor 34 angeordnet, welche während der Verdichtungstätigkeit Radarsignale 36 in Richtung des Erntegutes 12 sendet und an dem Erntegut 12 reflektierte Radarsignale 38 empfängt. Der Radarsensor 34 ist Bestandteil einer Sensorvorrichtung 40, welche an einer Trägervorrichtung 42 angeordnet ist. Die Trägervorrichtung 42 wiederum ist an dem Nutzfahrzeug 16 beweglich gelagert. Die Sensorvorrichtung 40 und die Trägervorrichtung 42 können gemeinsam als ein Sensormodul 44 bezeichnet werden, welches anhand der Fig. 6 bis Fig. 7b näher erläutert ist.

Die Steuereinheit 18 kann, insbesondere über die Datenverbindung 26, auf Umgebungsdaten 46 des Lagerortes des Erntegutes 12 zugreifen. Der Lagerort ist insbesondere ein Silo 48 (Fig. 4a). Die Umgebungsdaten 46 werden vorzugsweise mittels einer geeigneten Sensorik generiert und in einer Datenbank gespeichert. Sie repräsentieren insbesondere in Echtzeit aktuelle Umgebungsbedingungen und -merkmale des Nutzfahrzeugs 16. Mit Hilfe der Umgebungsdaten 46 kann die Steuereinheit 18 das Verfahren zur Dichteermittlung steuern, insbesondere das Verfahren zur Dichteermittlung automatisch starten, wenn das Nutzfahrzeug 16 eine entsprechende Position am Lagerort erreicht hat.

Darüber hinaus kann an dem Nutzfahrzeug 16 ein Umfeldsensor 50 angeordnet sein, welche innerhalb eines Sichtfeldes 52 auf der Basis eines erfassten Oberflächenprofils 54 des Erntegutes 12 Profildaten d_prof generiert. Vorzugsweise unterstützt der Umfeldsensor 50 auch eine Generierung der Umgebungsdaten 46. Die Steuereinheit 18 kann in Abhängigkeit der Profildaten d_prof die Trägervorrichtung 42 ansteuern, wie anhand der Fig. 7a und Fig. 7b näher erläutert.

Fig. 2 zeigt die Steuereinheit 18, welche als Eingangssignale S_e u.a. Radardaten d_rad empfängt. Die Radardaten d_rad repräsentieren zumindest die an dem Erntegut 12 reflektierten Radarsignale 38 und ggf. auch weitere Informationen. Anhand der Radardaten d_rad können die reflektierten Radarsignale 38 mit dem bereitgestellten Dichtemodell Di_mod verarbeitet werden. In Abhängigkeit von dem Verarbeitungsergebnis kann die aktuelle Dichte Di_e ermittelt bzw. abgeleitet werden. Optional kann auch ein Feuchtegehalt W_e des Erntegutes 12 ermittelt werden.

Die Dichte Di_e kann durch die Steuereinheit 18 während einer Verdichtungsüberfahrt des Nutzfahrzeugs 16 über das Erntegut 12 permanent aktuell bzw. in Echtzeit ermittelt werden. Die Steuereinheit 18 kann aber auch während eines Stillstandes des Nutzfahrzeugs 16, insbesondere während seines Aufenthalts am Lagerort bzw. im Silo 48, eine aktuelle Dichte Di_e ermitteln.

Die Steuereinheit 18 kann an mindestens einem zusätzlichen Signaleingang weitere Informationen I_op oder Größen empfangen. Dies sind beispielsweise:

- eine Kalibrierinformation I_kal (z.B. physikalische Konstante oder Materialparameter bezüglich des Erntegutes 12),
- ein Feuchtegehalt W des Erntegutes 12,
- eine Schnittlänge L des Erntegutes 12,
- ein Typ typ des Erntegutes 12 (z.B. Art der Pflanze, Vegetationszustand der Pflanze),
- eine den Beginn der Verdichtung repräsentierende Information I_start (z.B. Startsignal für die Ermittlung der Dichte Di_e, Startzeitpunkt der Dichteermittlung, von den Umgebungsdaten 46 abgeleitetes Signal).

Die vorgenannten Informationen I_op oder Größen können von anderen Datenquellen abgerufen werden oder manuell über die Benutzerschnittstelle 22 eingegeben werden oder sie können durch Messungen (z.B. mittels eines Sensors) zur Verfügung gestellt werden. Mit diesen zusätzlichen Informationen I_op kann eine noch präzisere Ermittlung der Dichte Di_e unterstützt werden. Es müssen nicht zwangsläufig sämtliche der vorgenannten Informationen bzw. Größen für die Steuereinheit 18 zur Verfügung stehen. Beispielsweise handelt es sich bei dem Feuchtegehalt W und bei der das Erntegut 12 charakterisierenden Information typ um Informationen, welche jeweils nur optional von der Steuereinheit 18 empfangen werden. Weiterhin optional können auch andere, hier nicht genannte Informationen bzw. Größen von der Steuereinheit 18 empfangen werden.

Die Informationen I_op werden zumindest teilweise vorzugsweise während der Verdichtungsüberfahrt des Nutzfahrzeugs 16, d.h. während der Verdichtungsarbeit, generiert.

In einer weiteren Funktion kann die Steuereinheit 18 dazu verwendet werden, in Abhängigkeit von der ermittelten aktuellen Dichte Di_e das Nutzfahrzeug 16 zu steuern, um dessen Arbeitseinsatz zu unterstützen. So können relevante Fahrzeug-Parameter wie etwa der Reifendruck, die Fahrzeuggeschwindigkeit oder die Lenkung mittels der Steuereinheit 18 gesteuert werden. Ebenso kann die Steuereinheit 18 in Abhängigkeit von der ermittelten aktuellen Dichte Di_e eine notwendige Restverdichtung berechnen. Auch eine materialspezifische (z.B. abhängig von dem Typ und der Feuchtigkeit des Erntegutes) Soll-Dichte kann von der Steuereinheit 18 ermittelt werden.

Fig. 3 zeigt beispielhaft eine Generierung von Referenzdaten d_ref vor Beginn der Verdichtung des Erntegutes 12 im Anwendungsfall. Hierbei wird in experimentellen Versuchen für ein Referenz-Material mat_ref des Erntegutes 12 beispielsweise bei einer definierten Referenz-Dichte Di_ref, einem definierten Referenz-Feuchtegehalt W_ref und einer definierten Referenz-Schnittlänge L_ref eine Referenz-Radarinformation rad_ref auf Basis reflektierter Referenz-Radarsignale 38_ref erfasst. Die Referenz-Radarinformation rad_ref repräsentiert ein Reflexionsverhalten des Referenz-Materials mat_ref und ggf. auch weitere physikalische Merkmale. Dabei kann die Referenz-Radarinformation rad_ref unterschiedliche Verdichtungszustände (von 0% bis 100%) berücksichtigen.

Bei der Generierung der Referenzdaten d_ref wird vorzugsweise eine Sensorvorrichtung 40 verwendet, welche zumindest hinsichtlich des Radarsensors 34 mit dem während der Verdichtungsüberfahrt des Nutzfahrzeugs 16 eingesetzten Radarsensor 34 identisch ist. Dabei generieren ausgesendete Referenz-Radarsignale 36_ref im Referenz-Material mat_ref reflektierte Referenz-Radarsignale 38_ref.

Die Referenzdaten d_ref werden bezüglich desselben Referenz-Materials vorzugsweise für unterschiedliche Zustände hinsichtlich der Referenz-Dichte Di_ref und/oder des Referenz-Feuchtegehalts W_ref und/oder der Referenz-Schnittlänge L_ref generiert. Die Referenzdaten können auch für unterschiedliche Referenz-Materialien mat_ref, insbesondere Materialien unterschiedlicher Typen des Erntegutes 12, generiert werden. Unterschiedliche Referenz-Materialien sind in Fig. 3 beispielhaft durch die Materialien mat1, mat2, mat3 angedeutet.

Die Daten bezüglich der Referenz-Dichte Di_ref können auch Daten enthalten, welche eine Dehnungscharakteristik (insbesondere Materialverhalten in unverdichtetem Zustand und nach einer definierten Verdichtung) repräsentieren.

In Abhängigkeit von den oder zumindest von einigen der Referenzdaten d_ref wird ein Dichtemodell Di_mod abgeleitet bzw. generiert und kann dann für das Verfahren zur Ermittlung der Dichte Di_e bereitgestellt werden. Die Referenzdaten d_ref werden nach Art von Kalibrierdaten generiert und das Dichtemodell kann als ein definiertes Ergebnis eines Kalibrierverfahrens betrachtet werden. Insbesondere enthält oder repräsentiert das Dichtemodell Di_mod einen mathematischen bzw. stochastischen Zusammenhang zwischen der oder den Referenz-Radarinformation(en) rad_ref und mindestens einer der vorgenannten Größen (Referenz-Dichte Di_ref, Referenz-Feuchtegehalt W_ref, Referenz-Schnittlänge L_ref). Dieser Zusammenhang ist derart, dass während der Verdichtungsarbeit im Anwendungsfall eine präzise mathematische Verarbeitung der Radardaten d_rad mit dem Dichtemodell Di_mod unterstützt wird.

Beispielsweise enthält das Dichtemodell Di_mod einen Algorithmus oder eine Formel, wonach eine Modelldichte Ro als

$$Ro = c1 \cdot\cdot a1 + c2 \cdot a2 + c3 \cdot a3$$

definiert ist. Dabei sind a1, a2, a3 Platzhalter für Amplitudenwerte der reflektierten Radarsignale 38 und c1, c2, c3 sind als Koeffizienten von den Referenzdaten d_ref abgeleitet. Von den reflektierten Radarsignalen 38 wird ein Amplitudenspektrum berechnet, deren Amplitudenwerte a1, a2, a3 bei vorbestimmten charakteristischen Frequenzen ermittelt werden. Somit können definierte Amplituden des Amplitudenspektrums als Eingangsgrößen für das Dichtemodell Di_mod verwendet werden. In dem Beispiel wird die zu ermittelnde Dichte Di_e von der Modelldichte Ro abgeleitet, insbesondere mit der Modelldichte Ro gleichgesetzt.

Fig. 4a und Fig. 4b zeigen das Silo 48, auf dessen Bodenplatte 56 das Erntegut 12 gelagert ist. In einem Oberflächenbereich 58 soll Material 60 des Erntegutes 12 verdichtet werden. Mit Hilfe von Positionsdaten d_pos des Nutzfahrzeugs 16 kann der Oberflächenbereich 58 in mehrere Oberflächenabschnitte 58-x eingeteilt werden, zu denen jeweils eine Dichte Di_e ermittelt wird. Die positionsabhängige Dichte Di_e kann dann mittels der Steuereinheit 18 an die Benutzerschnittstelle 22 gesendet werden. Auf diese Weise kann an der Anzeigeeinheit 24 die zu überfahrende Oberfläche 14, insbesondere der Oberflächenbereich 58, mit abschnittsweise zugeordneten aktuellen Dichten Di_e in Echtzeit visualisiert werden. Dabei können unterschiedliche Dichten Di_e durch unterschiedliche Farben dargestellt werden. Beispielsweise können unverdichtete Oberflächenabschnitte 58-x durch eine rote Farbe, vollständig verdichtete Oberflächenabschnitte 58-x durch eine grüne Farbe und Oberflächenabschnitte 58-x mit anderen Verdichtungszuständen bzw. -graden durch entsprechende Farbabstufungen dargestellt werden.

Fig. 5 zeigt die Sensorvorrichtung 40 mit mehreren Komponenten. Der bereits erwähnte Radarsensor 34 ist hier als eine Radarantenne mit einer Sende- und Empfangsfunktion ausgebildet. Für eine effiziente Aussendung der Radarsignale 36 in Richtung des Erntegutes 12 weist der Radarsensor 34 einen Signaldurchlass 62 auf, welcher ein Sensorgehäuse 64 durchsetzt. Die Sensorvorrichtung 40 enthält abgesehen von dem Radarsensor 34 optional eine Sensoreinheit 66 zur Temperierung der Sensorvorrichtung 40 und eine weitere Sensorik 68, z.B. zur Temperaturmessung oder optischen Detektion im Bereich des Erntegutes 12. Außerdem ist im Sensorgehäuse 64 eine Elektronik 70 für den Radarsensor 34 und die optionalen Sensoren 66, 68 enthalten.

Wie in Fig. 6 erkennbar, ist die Elektronik 70 an einen Kabelsatz 72 für die Energieversorgung der Sensorvorrichtung 40 und für eine Datenübertragung angeschlossen. Vorzugsweise enthält der Kabelsatz 72 ein Versorgungskabel für eine Energieversorgung der Sensorvorrichtung 40 und ein Datenkabel für die Datenübertragung. Zumindest das Datenkabel des Kabelsatzes 72 ist an die Sensorvorrichtung 40 und die Steuereinheit 18 angeschlossen. Somit können mittels des Kabelsatzes 72 beispielsweise die reflektierten Radarsignale 38 in Form der Radardaten d_rad an die Steuereinheit 18 gesendet werden.

Das Sensorgehäuse 64 ist an der Trägervorrichtung 42 beweglich gelagert, insbesondere mittels einer quer zur Längsrichtung des Nutzfahrzeugs 16 verlaufenden Schwenkachse 74 an der Trägervorrichtung 42 gelagert. Die Trägervorrichtung 42 ist als eine mehrarmige Hebelkonstruktion ausgebildet, welche mittels eines Aktuators 76 in Form eines längenveränderbaren Hebelarmes, z.B. ein Hydraulikzylinder, bewegungssteuerbar ist. Hierdurch bewirkt der Aktuator 76 eine Einstellung unterschiedlicher Positionen der Sensorvorrichtung 40 relativ zur Oberfläche 14 des Erntegutes 12. Sowohl der Aktuator 76 als auch die Trägervorrichtung 42 sind über die Lagerstellen 78, 80 an dem Nutzfahrzeug 16 beweglich gelagert.

Die Trägervorrichtung 42 ist mit einer Kontakteinheit 82 für einen mechanischen Gleitkontakt mit der Oberfläche 14 des Erntegutes 12 verbunden. Dabei ist die Kontakteinheit 82 an einer Bodenseite des Sensorgehäuses 64 befestigt und unterstützt die Sensorvorrichtung 40 bzw. den Radarsensor 34 in ihrer Funktionalität auch bei einem ungünstigen Verlauf der Oberfläche 14 des Erntegutes 12. Die Kontakteinheit 82 weist an beiden Längsenden jeweils eine Kufe 84 auf, so dass die Funktion der Kontakteinheit 82 sowohl bei Vorwärts- als auch Rückwärtsfahrt des Nutzfahrzeugs 10 gegeben ist.

Bei den einstellbaren Positionen der Trägervorrichtung 42 handelt es sich insbesondere um eine Arbeitsposition pos_ar für den Radarsensor 34 (Fig. 7a) und um eine gegenüber der Arbeitsposition pos_ar angehobene Transportposition pos_tr für den Radarsensor 34 (Fig. 7b). Die Transportposition pos_tr ist vorteilhaft dann eingestellt, wenn keine Dichteermittlung stattfindet, insbesondere wenn sich das Nutzfahrzeug 16 außerhalb des Silos 48 befindet. Die demgegenüber abgesenkte Arbeitsposition pos_ar wird vorteilhaft dann eingestellt, wenn das Nutzfahrzeug 16 in das Silo 48 eingefahren ist und insbesondere auf dem Erntegut 12 steht. Zur Einstellung der beiden Positionen pos_tr, pos_ar wird die Trägervorrichtung 42 und/oder der Aktuator 76 von der Steuereinheit 18 in Abhängigkeit der Umgebungsdaten 46 angesteuert.

Die Arbeitsposition pos_ar kann hinsichtlich ihrer vertikalen Arbeitshöhe h_ar unterschiedlich eingestellt werden. Hierdurch kann zwischen der Sensorvorrichtung 40 bzw. der Kontakteinheit 82 und der Oberfläche 14 beispielsweise ein unmittelbarer Kontakt (Abstand = 0) oder ein konstanter Abstand > 0 hergestellt werden. Zu diesem Zweck wird die Trägervorrichtung 42 und/oder der Aktuator 76 von der Steuereinheit 18 in Abhängigkeit der Profildaten d_prof angesteuert. Alternativ kann die Trägervorrichtung 42 und/oder der Aktuator 76 in einen Schwebemodus versetzt werden, so dass die Sensorvorrichtung 40 bzw. die Kontakteinheit 82 frei schwebend an der Oberfläche 14 entlanggleitet. Hierbei kann vorteilhaft das Eigengewicht verschiedener Komponenten, insbesondere der Sensorvorrichtung 40, derart abgefangen werden, dass sich diese Komponenten nicht in bereits verdichtetes Material des Erntegutes 12 eingraben. Somit bleibt dieses Material zuverlässig kompaktiert. Für diese Gewichtskraftentlastung ist eine am Nutzfahrzeug 16 gelagerte Entlastungseinrichtung 86 vorgesehen, welche beispielsweise den Aktuator 76 enthält. Alternativ oder zusätzlich kann die Entlastungseinrichtung 86 andere, hier nicht dargestellte Bauteile zur Kraftentlastung enthalten wie beispielsweise mindestens ein Federelement (insbesondere Zugfeder) und mindestens eine Kette. Diese Bauteile sind vorzugsweise miteinander gekoppelt einerseits am Nutzfahrzeug 16 gelagert und andererseits mit der Sensorvorrichtung 40 verbunden.

**Patentansprüche**

1. Verfahren zur Ermittlung einer Dichte (Di_e) eines gelagerten Erntegutes (12), dessen Oberfläche (14) von einem Nutzfahrzeug (16) zur Verdichtung überfahren wird, wobei die Dichte (Di_e) mittels eines Radarsensors (34) ermittelt wird, welcher Radarsignale (36) in Richtung des Erntegutes (12) sendet und an dem Erntegut (12) reflektierte Radarsignale (38) empfängt,
   **dadurch gekennzeichnet, dass**

   - in Abhängigkeit von Referenzdaten (d_ref) ein Dichtemodell (Di_mod) bereitgestellt wird, und
   - die Dichte (Di_e) in Abhängigkeit von dem bereitgestellten Dichtemodell (Di_mod) und den empfangenen reflektierten Radarsignalen (38) ermittelt wird.

2. Verfahren nach Anspruch 1, **dadurch gekennzeichnet, dass** die reflektierten Radarsignale (38) und/oder eine davon abgeleitete Größe (a1, a2, a3) mit dem Dichtemodell (Di_mod) verarbeitet werden und die Dichte (Di_e) in Abhängigkeit von dem Verarbeitungsergebnis ermittelt wird.

3. Verfahren nach Anspruch 1 oder 2, **dadurch gekennzeichnet, dass** in Abhängigkeit von dem bereitgestellten Dichtemodell (Di_mod) und/oder von den empfangenen reflektierten Radarsignalen (38) ein Feuchtegehalt (W_e) des Erntegutes (12) ermittelt wird.

4. Verfahren nach einem der vorhergehenden Ansprüche,
   **dadurch gekennzeichnet, dass** die Referenzdaten (d_ref) und/oder das Dichtemodell (Di_mod) vor Beginn der Verdichtung des Erntegutes (12) generiert werden.

5. Verfahren nach einem der vorhergehenden Ansprüche, **dadurch gekennzeichnet, dass** die Referenzdaten (d_ref) mindestens eine der folgenden Größen eines Referenz-Materials (mat_ref) des Erntegutes (12) enthalten:

   - eine Referenz-Dichte (Di_ref),
   - ein Referenz-Feuchtegehalt (W_ref),
   - eine Referenz-Schnittlänge (L_ref).

6. Verfahren nach einem der vorhergehenden Ansprüche, **dadurch gekennzeichnet, dass** die Referenzdaten (d_ref) eine Referenz-Radarinformation (rad_ref) enthalten, welche an dem Referenz-Material (mat_ref) des Erntegutes (12) reflektierte Referenz-Radarsignale (38_ref) repräsentiert.

7. Verfahren nach einem der vorhergehenden Ansprüche, **dadurch gekennzeichnet, dass** Referenzdaten (d_ref) und/oder das Dichtemodell (Di_mod) für unterschiedliche Referenz-Materialien (mat1, mat2, mat3) des Erntegutes (12) bereitgestellt werden.

8. Verfahren nach einem der vorhergehenden Ansprüche, **dadurch gekennzeichnet, dass** die Dichte (Di_e) in Abhängigkeit von mindestens einer der folgenden Informationen (I_op) ermittelt wird:

   - eine Kalibrierinformation (I_kal),
   - ein Feuchtegehalt (W) des Erntegutes (12),
   - eine Schnittlänge (L) des Erntegutes (12),
   - ein Typ (typ) des Erntegutes,
   - eine den Beginn der Verdichtung repräsentierende Startinformation (I_start).

9. Verfahren nach Anspruch 8, **dadurch gekennzeichnet, dass** die mindestens eine Information (I_op) während der Verdichtungsüberfahrt des Nutzfahrzeuges (16) generiert wird.

10. Verfahren nach einem der vorhergehenden Ansprüche,
    **dadurch gekennzeichnet, dass** die Dichte (Di_e) während der Verdichtungsüberfahrt oder während eines Stillstandes des Nutzfahrzeugs (16) ermittelt wird.

11. Verfahren nach einem der vorhergehenden Ansprüche,
    **dadurch gekennzeichnet, dass** entlang der überfahrenen Oberfläche (14, 58) des gelagerten Erntegutes (12) an mehreren Oberflächenabschnitten (58-x) jeweils eine Dichte (Di_e) ermittelt wird.

12. Verfahren nach einem der vorhergehenden Ansprüche,
**dadurch gekennzeichnet, dass** die ermittelte Dichte (Di_e) an einer Anzeigeeinheit (24) visualisiert wird.

13. System (10) zur Ermittlung einer Dichte (Di_e) eines gelagerten Erntegutes (12), mit einem Nutzfahrzeug (16) zur Verdichtung des gelagerten Erntegutes (12), mit einem am Nutzfahrzeug (16) angeordneten Radarsensor (34) und mit einer Steuereinheit (18) zur Durchführung des Verfahrens nach einem der Ansprüche 1 bis 12.

14. System nach Anspruch 13, **dadurch gekennzeichnet, dass** die Steuereinheit (18) in dem Nutzfahrzeug (16) enthalten ist.

15. System nach Anspruch 13 oder 14, **dadurch gekennzeichnet, dass** mindestens eine der folgenden Komponenten Bestandteil des Systems (10) ist und mit der Steuereinheit (18) über eine Datenverbindung (26, 28) verbunden ist:

- eine Benutzerschnittstelle (22) zur Eingabe und/oder Visualisierung von Daten,
- ein Positionserfassungssystem (20),
- eine Datenzentrale (30) mit Daten (d_agr), welche während der Verfahrensdurchführung entstanden sind und/oder bereitgestellt sind,
- eine Datenbank (32) mit einem in Abhängigkeit von Referenzdaten (d_ref) bereitgestellten Dichtemodell (Di_mod) für eine Ermittlung der Dichte (Di_e) in Abhängigkeit von an dem Erntegut (12) reflektierten Radarsignalen (38).

FIG. 1

FIG. 2

FIG. 3

FIG. 4A

FIG. 4B

FIG. 5

FIG. 6

FIG. 7A

FIG. 7B

**EP 4 663 004 A1**

Europäisches
Patentamt
European
Patent Office
Office européen
des brevets

# EUROPÄISCHER RECHERCHENBERICHT

Nummer der Anmeldung

EP 24 18 1059

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 197 307 A1 (DEERE & CO [US]) 21. Juni 2023 (2023-06-21) | 1-3,5,6, 8-10, 12-15 | INV. A01F25/16 A01F25/18 |
| A | * Ansprüche 1-4, 6-7; Abbildungen 1-3 * * Absätze [0009] - [0011], [0014] - [0016], [0018], [0021], [0024], [0026], [0036] - [0037], [0039], [0043], [0048] - [0052] * ----- | 4,7,11 | |
| A | EP 4 124 238 A1 (DEERE & CO [US]) 1. Februar 2023 (2023-02-01) * Anspruch 1; Abbildung 1 * ----- | 1,13 | |

RECHERCHIERTE SACHGEBIETE (IPC)

A01F

Der vorliegende Recherchenbericht wurde für alle Patentansprüche erstellt

| Recherchenort | Abschlußdatum der Recherche | Prüfer |
|---|---|---|
| Den Haag | 13. November 2024 | Guillem Gisbert, I |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 18 1059

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-2024

| Im Recherchenbericht angeführtes Patentdokument | Datum der Veröffentlichung | Mitglied(er) der Patentfamilie | Datum der Veröffentlichung |
|---|---|---|---|
| EP 4197307 A1 | 21-06-2023 | DE 102021133187 A1 | 15-06-2023 |
| | | EP 4197307 A1 | 21-06-2023 |
| | | US 2023184694 A1 | 15-06-2023 |
| EP 4124238 A1 | 01-02-2023 | DE 102021119684 A1 | 02-02-2023 |
| | | EP 4124238 A1 | 01-02-2023 |
| | | US 2023034813 A1 | 02-02-2023 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020110297 A1